# EUROPEAN PATENT SPECIFICATION

(11) **EP 2 490 401 B1**
(45) Date of publication and mention of the grant of the patent: **27.09.2017**
(21) Application number: 11154742.8
(22) Date of filing: 16.02.2011
(51) Int. Cl.: H04L 29/08, H04B 5/00

(54) **Mobile wireless communications device providing object reference data based upon near field communication (NFC) and related methods**
Objektreferenzdaten bereitstellende mobile drahtlose Kommunikationsvorrichtung auf Grundlage von Nahfeldkommunikation und zugehörige Verfahren
Dispositif de communications sans fil mobile fournissant des données de référence d'objets basées sur la communication de champ proche et procédés apparentés

(43) Date of publication of application: 22.08.2012
(73) Proprietor: BlackBerry Limited, Waterloo, ON N2K 0A7 (CA)
(72) Inventor: Hill, Thomas Casey, Rolling Meadows, IL 60008 (US)
(74) Representative: Fennell, Gareth Charles

(56) References cited:
- WO-A1-2010/148816
- US-A1- 2005 116 945

## Description

### Technical Field

This application relates to the field of communications, and more particularly, to wireless communications systems and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters.

WO2010/148816A1 discloses method for implementing reader application of near field communication mobile terminal and device thereof.

### Brief Description of the Drawings

FIG. 1 is a schematic block diagram of a communications system in accordance with an example embodiment.
FIG. 2 is another schematic block diagram of the communications system of FIG. 1 including the display of the mobile device.
FIG. 3 is a schematic view of the mobile device of the system of FIG. 1 providing object reference data based upon a sensed image of a monument.
FIG. 4 is a schematic view of the mobile device of the system of FIG. 1 providing object reference data based upon a sensed image of a street.
FIG. 5 is a schematic block diagram of a communications system in accordance with another example embodiment.
FIG. 6 is a flow diagram illustrating example method aspects associated with the system and devices of FIGS. 1-4.
FIG. 7 is a flow diagram illustrating example method aspects associated with the system and devices of FIG. 5.
FIG. 8 is a schematic block diagram illustrating example components of a mobile wireless communications device that may be used in accordance with various implementations.

### Detailed Description

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

Generally speaking, a wireless communication system is disclosed herein which may include a near field communication (NFC) reference device configured to store object reference data for at least one object associated with a geographic location of the NFC device. The wireless communications system may also include a mobile wireless communications device that includes an NFC transceiver configured to communicate with the NFC device based upon proximity thereto, an image sensor, a display, and a controller. The controller may cooperate with the NFC transceiver, the image sensor, and the display. The controller may be configured to determine a sensed image from the image sensor. The sensed image may have at least one sensed object therein, for example. The controller may also be configured to select object reference data for the at least one sensed object based upon communication with the NFC reference device, and display the object reference data and the sensed image on the display.

The NFC reference device may be configured to store at least one reference image, for example. The controller may be configured to select the object reference data based upon performing image recognition between the sensed image and the at least one reference image, for example.

The NFC reference device may be configured to store reference position data. The mobile wireless communications device may include a position determining device, for example. The controller may be configured to cooperate with the position determining device to select the object reference data based upon the stored reference position data and a position of the mobile wireless communications device. The controller may be configured to cooperate with the position determining device to generate an alert that the NFC reference device is nearby based upon a position of the mobile wireless communications device, for example.

The at least one sensed object may include a plurality of sensed objects. Each sensed object may have a category associated therewith from among a plurality of different categories, for example. The controller may be configured to select the object reference data based upon the different categories.

The controller may be configured to cooperate with the display to overlay the object reference data on the sensed image. The NFC reference device may include an NFC reference device transceiver, an NFC reference device memory, and an NFC reference device controller coupled to the NFC reference device transceiver and NFC reference device memory.

A mobile wireless communications device, similar to the one described briefly above, and a related communications method are also provided. The method may include determining a sensed image from the image sensor. The sensed image may have at least one sensed object therein. The method may also include selecting object reference data for the at least one sensed object based upon communication with an NFC reference device configured to communicate with the NFC transceiver based upon proximity thereto. The NFC reference device may be configured to store object reference data for at least one object associated with a geographic location of the NFC reference device. The method also includes displaying the object reference data and the sensed image on the display.

A related computer-readable medium for use with a mobile wireless communications device, such as the one described briefly above, may have computer-executable instructions for causing the mobile wireless communications device to perform various steps. The steps may include determining a sensed image from the image sensor. The sensed image may have at least one sensed object therein. The steps may also include selecting object reference data for the at least one sensed object based upon communication with an NFC reference device configured to communicate with the NFC transceiver based upon proximity thereto, for example. The NFC reference device may be configured to store object reference data for at least one object associated with a geographic location of the NFC reference device. The steps may also include displaying the object reference data and the sensed image on the display, for example.

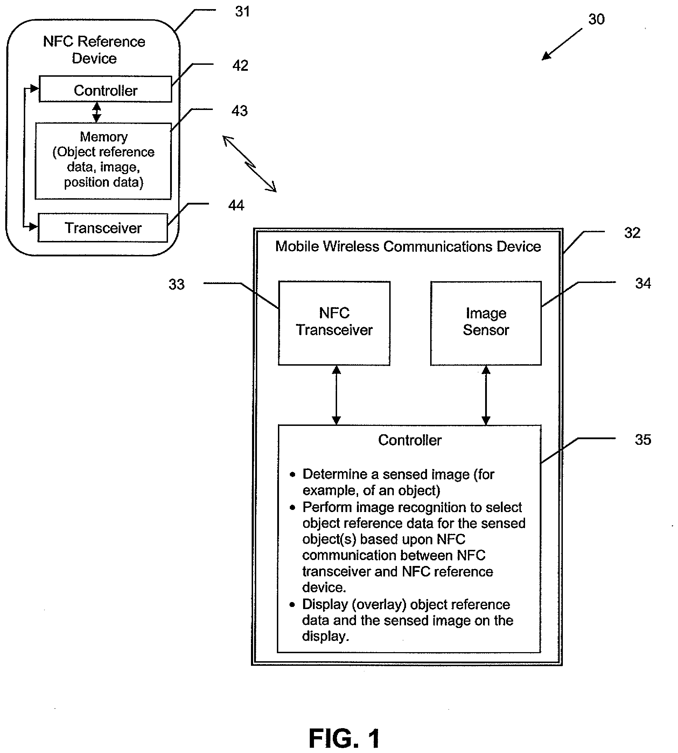

Referring initially to FIGS. 1-3, a communications system **30** is first described. The system **30** illustratively includes a near field communication (NFC) reference device **31** configured to store object reference data for an object associated with a geographic location, and a mobile wireless communications device **32** (also referred to as a "mobile device" herein). Example mobile wireless communications devices may include portable or personal media players (e.g., music or MP3 players, video players, etc.), portable gaming devices, portable or mobile telephones, smartphones, tablet computers, digital cameras, etc.

By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used.

The NFC reference device **31** includes a NFC reference device transceiver **44,** an NFC reference device memory **43,** and a NFC reference device controller **42** coupled to the NFC reference device transceiver and NFC reference device memory. In one example embodiment, the NFC reference device memory **43** is configured to store reference images for objects geographically near the NFC reference device **31.** In particular, the NFC reference device **31** may store reference images for objects within a threshold geographic radius of the NFC reference device.

The mobile device **32** illustratively includes an NFC transceiver **33** configured to communicate with the NFC reference device **31** based upon proximity thereto using NFC communication, an image sensor **34,** a display **36,** and a controller **35** coupled to the NFC transceiver, the image sensor, and the display. By way of example, the image sensor **34** may comprise one or more digital camera or image capture components, such as a lens, a charge-coupled device (CCD), etc. The controller **35** may be implemented using hardware (e.g., processor, memory, etc.) and software components, i.e., computer-readable instructions for causing the mobile device **32** to perform the various functions or operations described herein. The NFC reference device **31** may be an NFC tag, an NFC-enabled mobile device, etc.

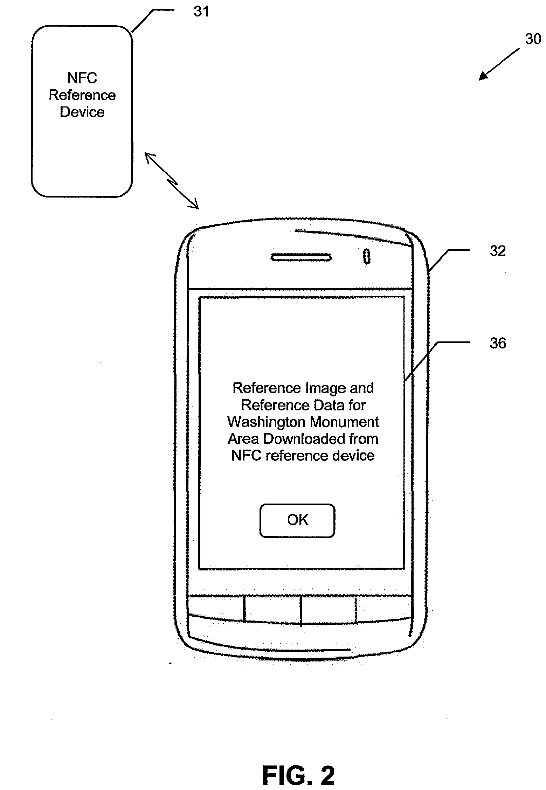

One or more of the stored reference images from the NFC reference device memory **43** may be communicated from the NFC reference device **31** via the NFC reference device transceiver **44** and the NFC transceiver **33.** Successful download of stored reference images and the object reference data may be optionally indicated by way of the display **36.** (FIG. 2).

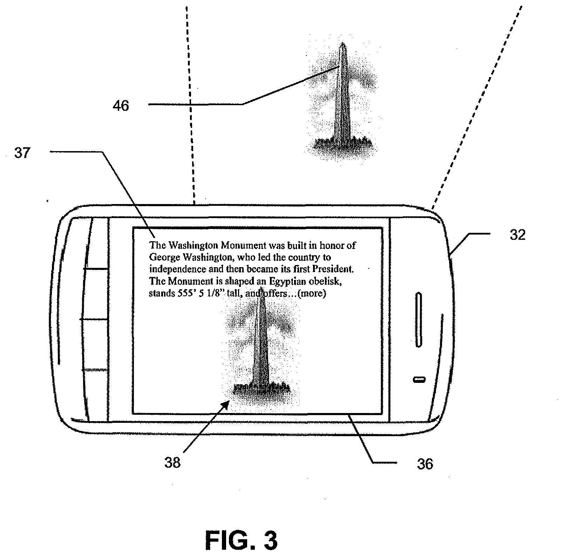

The controller **35** is configured to determine a sensed image **38** from the image sensor **34.** For example, the controller may cause the image sensor **34** to capture a single image or a continuous stream of images, as in the case with taking a digital picture or a digital video. In the example of FIG. 3, an object **46,** for example, a monument is in the field of view or viewfinder of the mobile device **32,** and the image **38** captured by its image sensor (e.g., camera) is displayed on the display **36.** The sensed image **38** may include other or additional objects.

The controller **35** is configured to select the corresponding object reference data based upon performing image recognition between the sensed image **38** from the image sensor **34** and the received stored reference images. In the illustrated example, the sensed image **38** includes an object **46,** in particular, the Washington Monument. In some embodiments, the sensed image **38** may not have an object therein or visible on the display **36.** For example, the object may be behind trees, and thus may not be visible on the display **36.** A stored reference image or images may be received from an NFC reference device **31** nearby the Washington Monument, and may also include object reference data **37,** for example, historical data, relating thereto. The controller **35,** by performing image recognition, may identify the Washington Monument **46** in the sensed image **38.** The controller **35** may be configured to display the object reference data **37** and the sensed image **38** on the display **36.** More particularly, the controller **35** may advantageously be configured to overlay the object reference data **37** at least partially over the sensed image **38** as augmented reality (AR) data. In some example embodiments, the controller **35** may display the reference data **37** alongside the sensed image **38.** The controller **35** may be configured to display the reference image data and the sensed image **38** in other configurations.

Additionally, while the controller **35** advantageously receives stored reference images from the NFC reference device **31,** in other example embodiments (not shown), the controller may communicate the sensed image **38** to the NFC reference device, wherein the NFC reference device controller **42** may perform the image recognition. The NFC reference device controller **42** may select the corresponding object reference data and communicate the same to the controller **35** for displaying with the sensed image **38.** Referring to the Washington Monument example, the object reference data **37** may include the height, name of the monument, the date it was built, etc.

Each sensed object **46** advantageously has a category associated therewith. For example, the Washington Monument **46** may be associated with categories, such as, for example, historical structures, and "vacation." A sensed object **46** may be associated with various categories, and may be user-defined or have pre-defined default category associations, for example. The controller **35** may be configured to select the object reference data **37** based upon the different categories. More particularly, in a "vacation mode," for example, the controller **35** may select object reference data associated with the vacation category. In a "business mode," for example, the controller **35** may select and display object reference data associated with business, for example, subway entrances, coffee shops, etc., and not select and display object reference data for tourist attractions, such as the Washington Monument. The controller **35** may also select the object reference data **37** based upon priority or ranking, which may be user-defined or set by a user-profile, for example.

Indeed, receiving object reference data **37** from the NFC reference device **31** may be particularly advantageous as it provides augmented reality while reducing the amount of data traffic that would otherwise be present on a cellular network if many users are located in a common area and attempting to simultaneously access such information, for example. This may also decrease power consumption for the mobile device, and thereby increase battery life.

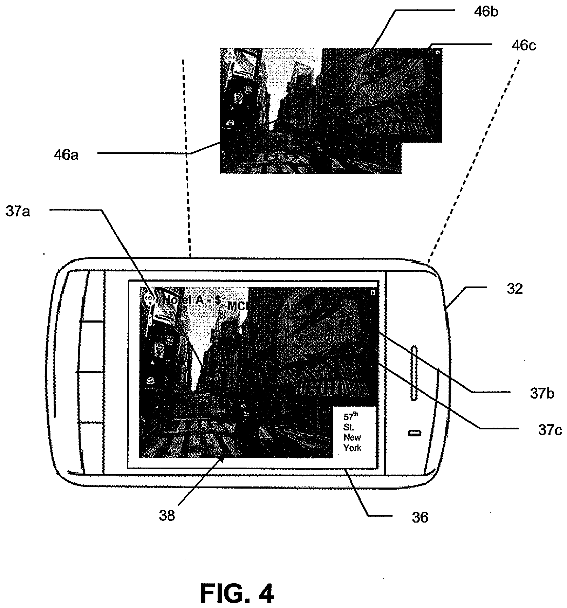

Referring now to the example of FIG. 4, the sensed image **38** includes more than one object. More particularly, the sensed image **38** is a view down a street. Several objects **46a-46c,** for example, two restaurants and a hotel, are in the field of view or viewfinder of the mobile device **32,** and the image **38** captured by its image sensor (e.g., camera) is displayed on the display **36.** The sensed image **38** illustratively includes other or additional objects.

The controller **35** selects the corresponding object reference data. The controller **35** may select the corresponding object reference data based upon selected categories, as described above. In the illustrated example, object reference data associated with hotels (i.e. lodging) and restaurants, for example, is overlaid over the sensed image **38** as AR data. In particular, object reference data **37a** identifying the object **46a** as "Hotel A" and a price guide (i.e. a price range as indicated by a given number of dollar signs) are overlaid over the sensed image **38** as AR data. Similar object reference data **37b, 37c** identifying the objects **46b, 46c** and price guide for the "MCD" and "TGI" restaurants, respectively, are also overlaid over the sensed image **38** as AR data. Additional information identifying other objects may be displayed based upon selected categories, for example.

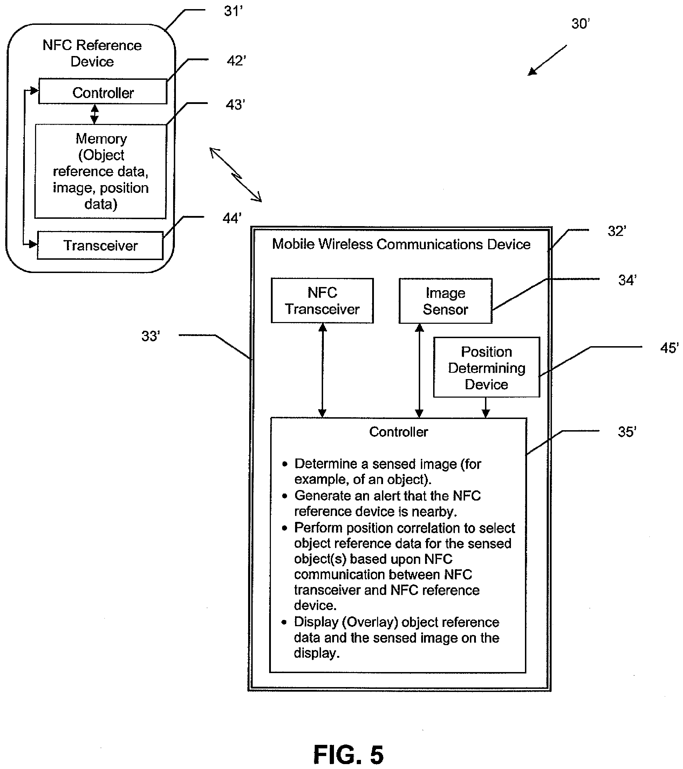

Referring now to FIG. 5, in another example embodiment, the NFC reference device memory **43'** may be configured to store reference position data corresponding to objects geographically near the NFC reference device **31'**. Similarly, the NFC reference device **31'** may store reference images for objects within a threshold geographic radius of the NFC reference device.

The mobile device **32'** also includes a position determining device **45'** configured to determine a geographical position. For example, the position determining device **45'** may comprise a global positioning system (GPS) receiver. More than one position determining device may be used. For example, the GPS receiver **45'** may cooperate with a bearing or heading determining device, such as a compass, for example, to determine the geographical position of what is in the field of view or viewfinder of the image sensor **34'**. As such, image comparison and recognition, as described above, need not be used, although either technique (or both) may be used in a given embodiment.

The controller **35'** may also be configured to cooperate with the position determining device **45'** to generate an alert that the NFC reference device **31'** is nearby based upon the position of the mobile device **31'.** In particular, the mobile device **31'** may sound an audible alert, vibrate, or generate another type of alert when the mobile device is within a threshold geographical area as determined by the position determining device **45'.**

The object reference data **37'** for an object **46'** associated with the geographic location of the NFC reference device **31'** may include historical information, schedules or hours of operation, or any other information that may be associated with an object. The object **46'** may be a structure, for example, a statue, a monument, a shelter, and a building, but it will be appreciated that the object may be another type of object.

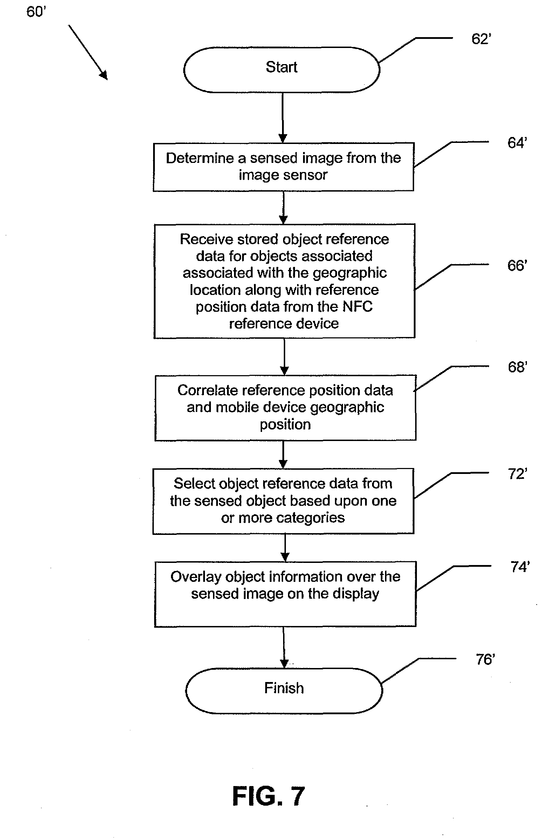

Referring to the flow diagram **60** in FIG. 7, an example method aspect is now described. Beginning at Block **62,** the method includes determining a sensed image **38** from the image sensor **34** (Block **64**). The sensed image **38** has sensed objects therein **46.** In other embodiments, the sensed image **38** may not have a sensed object therein. The method further includes, at Block **66,** receiving stored object reference data for objects associated with the geographic location along with reference images from the NFC reference device **31.** At Block **68,** the method includes performing image recognition between the sensed image and the reference image. At Block **72,** the method includes selecting object reference data for the sensed object based upon one or more categories. The object reference data **37,** is overlaid on the sensed image **38** on the display **36** at Block **74.** The method ends at Block **76.**

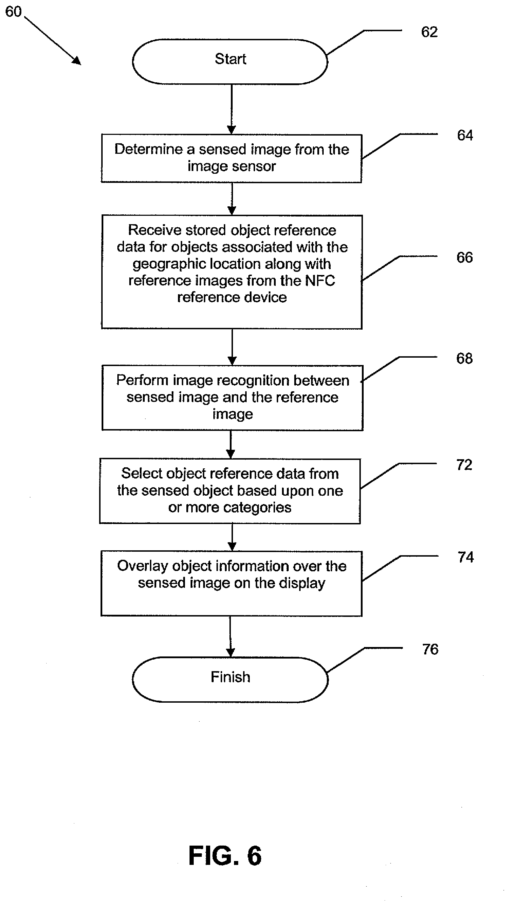

Referring now to the flow diagram **60'** in FIG. 6, a method aspect is disclosed. Beginning at Block **62',** the method includes determining a sensed image **38'** from the image sensor **34'** (Block **64'**). The sensed image **38'** has sensed objects therein **37**'. The method further includes, at Block **66',** receiving stored object reference data for objects associated with the geographic location along with reference position data from the NFC reference device **31'.** At Block **68',** the method includes correlating the reference position data and geographic position of the mobile device **32'** determined from a position determining device **45'.** At Block **72',** the method includes selecting object reference data for the sensed object **46'** based upon one or more categories. The reference data **37'** is overlaid on the sensed image **38'** on the display **36'** at Block **74'.** The method ends at Block **76'.**

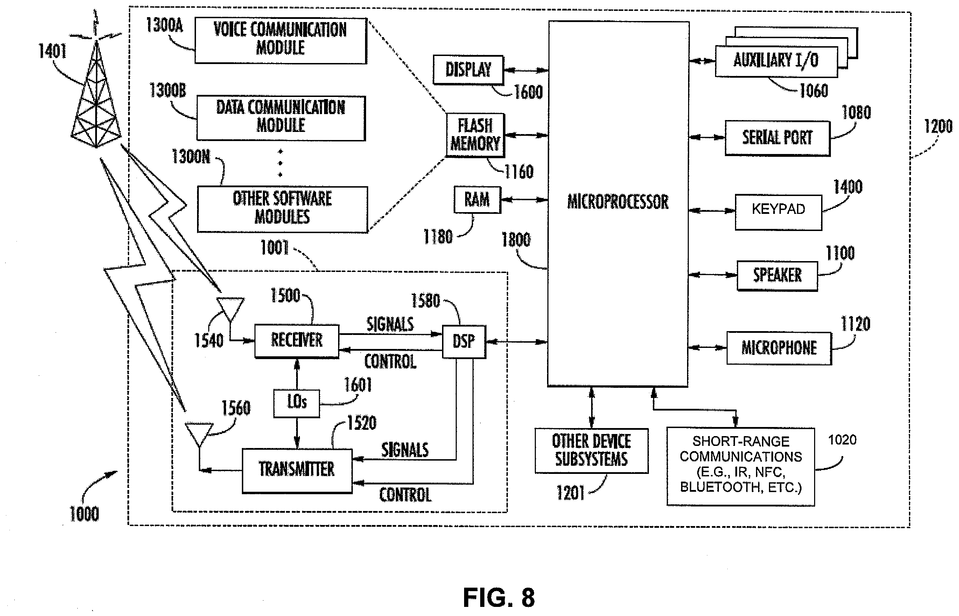

Example components of a mobile wireless communications device **1000** that may be used in accordance with the above-described embodiments are further described below with reference to FIG. 8. The device **1000** illustratively includes a housing **1200,** a keyboard or keypad **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 8. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) sensor for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A wireless communications system (30) comprising:
a near field communication (NFC) reference device (31) configured to store object reference data for at least one object (46) associated with a geographic location of said reference NFC device; and
a mobile wireless communications device (32) comprising
an NFC transceiver (33) configured to communicate with said NFC reference device based upon proximity thereto,
an image sensor (34),
a display (36), and
a controller (35) cooperating with said NFC transceiver, said image sensor, and said display and configured to
determine a sensed image from said image sensor,
select object reference data for the sensed image based upon communication with said NFC reference device, and
display the object reference data and said sensed image on said display.

2. The system (30) of Claim 1 wherein the NFC reference device (31) is configured to store at least one reference image; and wherein said controller (35) is configured to select the object reference data based upon performing image recognition between the sensed image and the at least one reference image.

3. The system (30') of Claim 1 wherein the NFC reference device (31') is configured to store reference position data; wherein said mobile wireless communications device (32') comprises a position determining device (45'); and wherein said controller (35') is configured to cooperate with said position determining device to select the object reference data based upon the stored reference position data and a position of said mobile wireless communications device.

4. The system (30') of Claim 1 wherein said mobile wireless communications device (32') further comprises a position determining device (45'); and wherein said controller (35') is configured to cooperate with said position determining device to generate an alert that said NFC reference device (31') is nearby based upon a position of said mobile wireless communications device.

5. The system (30) of Claim 1 wherein the sensed image has at least one sensed object therein, and wherein said controller (35) is configured to select object reference data for the at least one sensed object based upon communication with said NFC reference device (31).

6. The system (30) of Claim 5 wherein the at least one sensed object comprises a plurality of sensed objects, each sensed object having a category associated therewith from among a plurality of different categories; and wherein said controller (35) is configured to select the object reference data based upon the different categories.

7. The system (30) of Claim 1 wherein said controller (35) is configured to cooperate with said display (36) to overlay the object reference data on said sensed image.

8. A mobile wireless communications device (32) for use with a near field communication (NFC) reference device (31) configured to store object reference data for at least one object (46) associated with a geographic location of the NFC reference device, the mobile wireless communications device comprising:
an NFC transceiver (33) configured to communicate with said NFC reference device based upon proximity thereto;
an image sensor (34);
a display (36); and
a controller (35) cooperating with said NFC transceiver, said image sensor, and said display and configured to
determine a sensed image from said image sensor,
select object reference data for the sensed image based upon communication with said NFC reference device, and
display the object reference data and said sensed image on said display.

9. The mobile wireless communications device (32) of Claim 8 wherein the NFC reference device (31) is configured to store at least one reference image; and wherein said controller (35) is configured to select the object reference data based upon performing image recognition between the sensed image and the at least one reference image.

10. The mobile wireless communications device (32') of Claim 8 wherein the NFC reference device (31') is configured to store reference position data; wherein said mobile wireless communications device comprises a position determining device (45'); and wherein said controller (35') is configured to cooperate with said position determining device to select the object reference data based upon the stored reference position data and a position of said mobile wireless communications device.

11. A method of using a mobile wireless communications device (32) comprising an NFC transceiver (33), an image sensor (34), and a display (36), the method comprising:
determining a sensed image from the image sensor,
selecting object reference data for the sensed image based upon communication with an NFC reference device (31) configured to communicate with the NFC transceiver based upon proximity thereto, the NFC reference device being configured to store object reference data for at least one object (46) associated with a geographic location of the NFC reference device, and
displaying the object reference data and the sensed image on the display.

12. The method of Claim 11 wherein the NFC reference device (31) is configured to store at least one reference image; and further comprising performing image recognition between the sensed image and the at least one reference image to select the object reference data.

13. The method of Claim 11 wherein the NFC reference device (31') is configured to store reference position data; wherein the mobile wireless communications device (32') comprises a position determining device (45'); and further comprising cooperating with the position determining device to select the object reference data based upon the stored reference position data and a position of the mobile wireless communications device.

14. The method of Claim 11 further comprising generating an alert that the NFC reference device (31) is nearby based upon a position of the mobile wireless communications device (32') from a position determining device (45').

15. The method of Claim 11 wherein the sensed image has at least one sensed object therein, and wherein selecting the object reference data comprises selecting the object reference data for the at least one sensed object based upon communication with the NFC reference device (31).

## Patentansprüche

1. Drahtloses Kommunikationssystem (30), umfassend:
eine Referenzvorrichtung (31) für Nahfeldkommunikation (NFC), die dafür konfiguriert ist, Objektreferenzdaten für zumindest ein Objekt (46) in Verbindung mit einem geografischen Standort der NFC-Referenzvorrichtung zu speichern, und
eine mobile drahtlose Kommunikationsvorrichtung (32) mit
einem NFC-Transceiver (33), der dafür konfiguriert ist, mit der NFC-Referenzvorrichtung zu kommunizieren, wenn sie sich in dessen Nähe befindet,
einem Bildsensor (34),
einem Display (36) und
einem Controller (35), der mit dem NFC-Transceiver, dem Bildsensor und dem Display zusammenwirkt und dafür konfiguriert ist,
ein von dem Bildsensor erfasstes Bild zu ermitteln,
auf der Grundlage der Kommunikation mit der NFC-Referenzvorrichtung Objektreferenzdaten für das erfasste Bild auszuwählen und
die Objektreferenzdaten und das erfasste Bild auf dem Display anzuzeigen.

2. System (30) nach Anspruch 1, wobei die NFC-Referenzvorrichtung (31) dafür konfiguriert ist, zumindest ein Referenzbild zu speichern, und wobei der Controller (35) dafür konfiguriert ist, die Objektreferenzdaten auf der Grundlage der Durchführung einer Bilderkennung zwischen dem erfassten Bild und dem zumindest einen Referenzbild auszuwählen.

3. System (30') nach Anspruch 1, wobei die NFC-Referenzvorrichtung (31') dafür konfiguriert ist, Referenzpositionsdaten zu speichern, wobei die mobile drahtlose Kommunikationsvorrichtung (32') eine Positionsbestimmungsvorrichtung (45') umfasst und wobei der Controller (35') dafür konfiguriert ist, mit der Positionsbestimmungsvorrichtung dahingehend zusammenzuwirken, dass er die Objektreferenzdaten auf der Grundlage der gespeicherten Referenzpositionsdaten und einer Position der mobilen drahtlosen Kommunikationsvorrichtung auswählt.

4. System (30') nach Anspruch 1, wobei die mobile drahtlose Kommunikationsvorrichtung (32') ferner eine Positionsbestimmungsvorrichtung (45') umfasst und wobei der Controller (35') dafür konfiguriert ist, mit der Positionsbestimmungsvorrichtung dahingehend zusammenzuwirken, dass er auf der Grundlage der Position der mobilen drahtlosen Kommunikationsvorrichtung einen Alarm generiert, dass sich die NFC-Referenzvorrichtung (31') in der Nähe befindet.

5. System (30) nach Anspruch 1, wobei das erfasste Bild zumindest ein erfasstes Objekt enthält und wobei der Controller (35) dafür konfiguriert ist, auf der Grundlage der Kommunikation mit der NFC-Referenzvorrichtung (31) Objektreferenzdaten für das zumindest eine erfasste Objekt auszuwählen.

6. System (30) nach Anspruch 5, wobei das zumindest eine erfasste Objekt eine Vielzahl von erfassten Objekten umfasst, wobei jedes erfasste Objekt eine ihm aus einer Vielzahl von verschiedenen Kategorien zugeordnete Kategorie hat und wobei der Controller (35) dafür konfiguriert ist, die Objektreferenzdaten auf der Grundlage der verschiedenen Kategorien auszuwählen.

7. System (30) nach Anspruch 1, wobei der Controller (35) dafür konfiguriert ist, mit dem Display (36) dahingehend zusammenzuwirken, die Objektreferenzdaten in dem erfassten Bild einzublenden.

8. Mobile drahtlose Kommunikationsvorrichtung (32) zum Einsatz mit einer Referenzvorrichtung (31) für Nahfeldkommunikation (NFC), die dafür konfiguriert ist, Objektreferenzdaten für zumindest ein Objekt (46) in Verbindung mit einem geografischen Standort der NFC-Referenzvorrichtung zu speichern, wobei die mobile drahtlose Kommunikationsvorrichtung umfasst:
einen NFC-Transceiver (33), der dafür konfiguriert ist, mit der NFC-Referenzvorrichtung zu kommunizieren, wenn sie sich in dessen Nähe befindet,
einen Bildsensor (34),
ein Display (36) und
einen Controller (35), der mit dem NFC-Transceiver, dem Bildsensor und dem Display zusammenwirkt und dafür konfiguriert ist,
ein von dem Bildsensor erfasstes Bild zu ermitteln,
auf der Grundlage der Kommunikation mit der NFC-Referenzvorrichtung Objektreferenzdaten für das erfasste Bild auszuwählen und
die Objektreferenzdaten und das erfasste Bild auf dem Display anzuzeigen.

9. Mobile drahtlose Kommunikationsvorrichtung (32) nach Anspruch 8, wobei die NFC-Referenzvorrichtung (31) dafür konfiguriert ist, zumindest ein Referenzbild zu speichern, und wobei der Controller (35) dafür konfiguriert ist, die Objektreferenzdaten auf der Grundlage der Durchführung einer Bilderkennung zwischen dem erfassten Bild und dem zumindest einen Referenzbild auszuwählen.

10. Mobile drahtlose Kommunikationsvorrichtung (32') nach Anspruch 8, wobei die NFC-Referenzvorrichtung (31') dafür konfiguriert ist, Referenzpositionsdaten zu speichern, wobei die mobile drahtlose Kommunikationsvorrichtung eine Positionsbestimmungsvorrichtung (45') umfasst und wobei der Controller (35') dafür konfiguriert ist, mit der Positionsbestimmungsvorrichtung dahingehend zusammenzuwirken, dass er die Objektreferenzdaten auf der Grundlage der gespeicherten Referenzpositionsdaten und einer Position der mobilen drahtlosen Kommunikationsvorrichtung auswählt.

11. Verfahren zur Verwendung einer mobilen drahtlosen Kommunikationsvorrichtung (32) mit einem NFC-Transceiver (33), einem Bildsensor (34) und einem Display (36), wobei das Verfahren umfasst:
Ermitteln eines von dem Bildsensor erfassten Bildes,
Auswählen von Objektreferenzdaten für das erfasste Bild auf der Grundlage einer Kommunikation mit einer NFC-Referenzvorrichtung (31), die dafür konfiguriert ist, mit dem NFC-Transceiver zu kommunizieren, wenn sich dieser in ihrer Nähe befindet, wobei die NFC-Referenzvorrichtung dafür konfiguriert ist, Objektreferenzdaten für zumindest ein Objekt (46) in Verbindung mit einem geografischen Standort der NFC-Referenzvorrichtung zu speichern, und
Anzeigen der Objektreferenzdaten und des erfassten Bildes auf dem Display.

12. Verfahren nach Anspruch 11, wobei die NFC-Referenzvorrichtung (31) dafür konfiguriert ist, zumindest ein Referenzbild zu speichern, wobei das Verfahren ferner das Durchführen einer Bilderkennung zwischen dem erfassten Bild und dem zumindest einen Referenzbild zum Auswählen der Objektreferenzdaten umfasst.

13. Verfahren nach Anspruch 11, wobei die NFC-Referenzvorrichtung (31') dafür konfiguriert ist, Referenzpositionsdaten zu speichern; wobei die mobile drahtlose Kommunikationsvorrichtung (32') eine Positionsbestimmungsvorrichtung (45') umfasst; und wobei das Verfahren ferner das Zusammenwirken mit der Positionsbestimmungsvorrichtung zum Auswählen der Objektreferenzdaten auf der Grundlage der gespeicherten Referenzpositionsdaten und einer Position der mobilen drahtlosen Kommunikationsvorrichtung umfasst.

14. Verfahren nach Anspruch 11, das ferner die Generierung eines Alarms umfasst, dass sich die NFC-Referenzvorrichtung (31) in der Nähe befindet, auf der Grundlage einer Position der mobilen drahtlosen Kommunikationsvorrichtung (32') von einer Positionsbestimmungsvorrichtung (45').

15. Verfahren nach Anspruch 11, wobei das erfasste Bild zumindest ein erfasstes Objekt enthält und wobei das Auswählen der Objektreferenzdaten das Auswählen der Objektreferenzdaten für das zumindest eine erfasste Objekt auf der Grundlage der Kommunikation mit der NFC-Referenzvorrichtung (31) umfasst.

## Revendications

1. Système de communication sans fil (30) comprenant :
un dispositif de référence (31) pour communication en champ proche, NFC pour *« Near Field Communication »,* configuré pour stocker des données de référence d'objet pour au moins un objet (46) associé à une position géographique dudit dispositif de référence NFC ; et
un dispositif de communication mobile sans fil (32) comprenant :
un émetteur-récepteur NFC (33) configuré pour communiquer avec ledit dispositif de référence NFC, en fonction de sa proximité avec celui-ci ;
un capteur d'images (34) ;
un écran d'affichage (36) ; et
un contrôleur (35) coopérant avec ledit émetteur-récepteur sans fil, ledit capteur d'images et ledit écran d'affichage et configuré pour :
déterminer une image photographiée par ledit capteur d'image ;
sélectionner des données de référence d'objet pour l'image photographiée, en fonction d'une communication avec ledit dispositif de référence NFC ; et
afficher les données de référence d'objet et ladite image photographiée sur ledit écran d'affichage.

2. Système (30) selon la revendication 1, dans lequel le dispositif de référence NFC (31) est configuré pour stocker au moins une image de référence et dans lequel ledit contrôleur (35) est configuré pour sélectionner les données de référence d'objet après avoir effectué une reconnaissance d'image portant sur l'image photographiée et ladite au moins une image de référence.

3. Système (30') selon la revendication 1, dans lequel le dispositif de référence NFC (31') est configuré pour stocker des données de position de référence, dans lequel ledit dispositif de communication mobile sans fil (32') comprend un dispositif de détermination de position (45') et dans lequel ledit contrôleur (35') est configuré pour coopérer avec ledit dispositif de détermination de position afin de sélectionner les données de référence d'objet en fonction des données de position de référence enregistrées et d'une position dudit dispositif de communication mobile sans fil.

4. Système (30') selon la revendication 1, dans lequel ledit dispositif de communication mobile sans fil (32') comprend en outre un dispositif de détermination de position (45') ; et dans lequel ledit contrôleur (35') est configuré pour coopérer avec ledit dispositif de détermination de position afin de produire une alerte indiquant que ledit dispositif de référence NFC (31') est proche, en fonction d'une position dudit dispositif de communication mobile sans fil.

5. Système (30) selon la revendication 1, dans lequel l'image photographiée comprend au moins un objet photographié et dans lequel ledit contrôleur (35) est configuré pour sélectionner des données de référence d'objet pour ledit au moins un objet photographié en fonction d'une communication avec ledit dispositif de référence NFC (31).

6. Système (30) selon la revendication 5, dans lequel ledit au moins un objet photographié comprend une pluralité d'objets photographiés, chaque objet photographié étant associé à une catégorie parmi une pluralité de catégories différentes et dans lequel ledit contrôleur (35) est configuré pour sélectionner les données de référence d'objet en fonction des différentes catégories.

7. Système (30) selon la revendication 1, dans lequel ledit contrôleur (35) est configuré pour coopérer avec ledit écran d'affichage (36) afin de superposer les données de référence d'objet sur ladite image photographiée.

8. Dispositif de communication mobile sans fil (32) destiné à être utilisé avec un dispositif de référence (31) pour communication en champ proche, NFC pour « *Near Field Communication* », configuré pour stocker des données de référence d'objet pour au moins un objet (46) associé à une position géographique dudit dispositif de référence NFC, le dispositif de communication mobile sans fil comprenant :
un émetteur-récepteur NFC (33) configuré pour communiquer avec ledit dispositif de référence NFC, en fonction de sa proximité avec celui-ci ;
un capteur d'images (34) ;
un écran d'affichage (36) ; et
un contrôleur (35) coopérant avec ledit émetteur-récepteur sans fil, ledit capteur d'images, et ledit écran d'affichage et configuré pour :
déterminer une image photographiée par ledit capteur d'image ;
sélectionner des données de référence d'objet pour l'image photographiée, en fonction d'une communication avec ledit dispositif de référence NFC ; et
afficher les données de référence d'objet et ladite image photographiée sur ledit écran d'affichage.

9. Dispositif de communication mobile sans fil (32) selon la revendication 8, dans lequel le dispositif de référence NFC (31) est configuré pour stocker au moins une image de référence et dans lequel ledit contrôleur (35) est configuré pour sélectionner les données de référence d'objet après avoir effectué une reconnaissance d'image portant sur l'image photographiée et ladite au moins une image de référence.

10. Dispositif de communication mobile sans fil (32') selon la revendication 8, dans lequel le dispositif de référence NFC (31') est configuré pour stocker des données de position de référence, dans lequel ledit dispositif de communication mobile sans fil comprend un dispositif de détermination de position (45') et dans lequel ledit contrôleur (35') est configuré pour coopérer avec ledit dispositif de détermination de position afin de sélectionner les données de référence d'objet en fonction des données de position de référence enregistrées et d'une position dudit dispositif de communication mobile sans fil.

11. Procédé d'utilisation d'un dispositif de communication mobile sans fil (32) comprenant un émetteur-récepteur NFC (33), un capteur d'images (34) et un écran d'affichage (36), le procédé comprenant les étapes consistant à :
déterminer une image photographiée par ledit capteur d'image ;
sélectionner des données de référence d'objet pour l'image photographiée, en fonction d'une communication avec un dispositif de référence NFC configuré pour communiquer avec l'émetteur-récepteur NFC, en fonction de sa proximité avec celui-ci, le dispositif de référence NFC étant configuré pour stocker des données de référence d'objet pour au moins un objet (46) associé à une position géographique du dispositif de référence NFC ; et
afficher les données de référence d'objet et l'image photographiée sur l'écran d'affichage.

12. Procédé selon la revendication 11, dans lequel le dispositif de référence NFC (31) est configuré pour stocker au moins une image de référence, comprenant en outre l'étape consistant à effectuer une reconnaissance d'images sur l'image photographiée et ladite au moins une image de référence, pour sélectionner les données de référence d'objet.

13. Procédé selon la revendication 11, dans lequel le dispositif de référence NFC (31') est configuré pour stocker des données de position de référence, dans lequel ledit dispositif de communication mobile sans fil (32') comprend un dispositif de détermination de position (45') et comprenant en outre l'étape consistant à coopérer avec ledit dispositif de détermination de position afin de sélectionner les données de référence d'objet en fonction des données de position de référence enregistrées et d'une position du dispositif de communication mobile sans fil.

14. Procédé selon la revendication 11, comprenant en outre l'étape consistant à produire une alerte indiquant que le dispositif de référence NFC (31) est proche, en fonction d'une position du dispositif de communication mobile sans fil (32') provenant d'un dispositif de détermination de position (45').

15. Procédé selon la revendication 11, dans lequel l'image photographiée comprend au moins un objet photographié et dans lequel l'étape de sélection des données de référence d'objet comprend l'étape consistant à sélectionner les données de référence d'objet pour ledit au moins un objet capturé en fonction d'une communication avec ledit dispositif de référence NFC (31).
